# EUROPEAN PATENT SPECIFICATION

(11) **EP 3 726 809 B1**
(45) Date of publication and mention of the grant of the patent: **04.12.2024**
(21) Application number: 18889407.5
(22) Date of filing: 31.10.2018
(51) Int. Cl.: H04L 51/18, H04L 51/04, H04W 4/44, H04W 4/12, H04W 12/08, H04L 67/12

(54) **VEHICLE-MOUNTED INSTANT MESSAGING METHOD AND VEHICLE-MOUNTED INSTANT MESSAGING SYSTEM**
FAHRZEUGMONTIERTES INSTANT-MESSAGING-VERFAHREN UND FAHRZEUGMONTIERTES INSTANT-MESSAGING-SYSTEM
PROCÉDÉ DE MESSAGERIE INSTANTANÉE MONTÉ SUR VÉHICULE ET SYSTÈME DE MESSAGERIE INSTANTANÉE MONTÉ SUR VÉHICULE

(30) Priority: 15.12.2017 CN 201711346246
(43) Date of publication of application: 21.10.2020
(73) Proprietor: NIO (Anhui) Holding Co., Ltd., Hefei City, Anhui Province (CN)
(72) Inventor: DAI, Chenglong, Shanghai (CN); SHEN, Fangzhu, Shanghai (CN); QIAN, Zhouqi, Shanghai (CN)
(74) Representative: Vossius & Partner Patentanwälte Rechtsanwälte mbB
(86) International application number: PCT/CN2018/112926
(87) International publication number: WO 2019/114447

(56) References cited:
- CN-A- 103 051 695
- CN-A- 104 316 065
- CN-A- 105 530 171
- CN-A- 106 210 047
- CN-A- 107 370 669
- CN-A- 107 370 669
- KR-A- 20150 097 879
- US-A1- 2014 359 018

## Description

### Technical Field

The invention relates to the field of onboard communications, and in particular to an onboard instant messaging method and an onboard instant messaging system.

### Background Art

With the development of mobile communication technologies, instant messaging technologies have been applied widely. More and more people carry out instant messaging with others by means of mobile terminals such as mobile phones (or tablet computers) via WeChat, mobile QQ, ISpeak, Fetion, etc.

For example, WeChat has been widely popularized as a well-known communication mode. However, in terms of how to carry out more convenient instant messaging on an onboard system, there are still some problems as follows.

In the prior art, information of such items as address and music is often involved in an instant messaging conversation, and the information is most likely to be a certain address or music that a user wants to obtain or play. However, the texts cannot be transmitted directly to an onboard device in the prior art. The common practice is that the user first copies the text in WeChat and then pastes same into the input at an onboard navigation system, and then the address in WeChat is used as the input at the onboard navigation system. Alternatively, moreover, there is a music in the instant messaging conversation that the user hopes to play, but there is no technology in the prior art that enables the music to be directly played in the onboard system.

US2014/359018 discloses a method and device for controlling peripheral devices via a social networking platform. A user may control a peripheral device of another user via an instant messaging system.

CN107370669 discloses an address sharing method and system, in which a mobile phone user can exchange address information with a head unit of a vehicle based on a certificate and a WeChat channel using an intermediary server.

### Summary of the Invention

In view of the above-mentioned problems, the invention aims to propose an onboard instant messaging method and an onboard instant messaging system, which can allow instant messaging technologies to be better integrated with an onboard system. The invention is set out in the independent claims, and the dependent claims provide further details.

In one aspect of the invention, an onboard instant messaging method is provided, which is characterized by being implemented by a user terminal, an instant messaging server, a backend system and a head unit, which comprises the following steps:
an account association step of associating an instant messaging user with a vehicle and storing an association relationship in the backend system;
a permission determination step of sending a permission determination request to the backend system from the user terminal via the instant messaging server so that the backend system performs permission determination based on the association relationship, and proceeding to a data exchange step described below if the permission determination indicates success, otherwise ending the process; and
the data exchange step of sending messaging data to the backend system from the user terminal via the instant messaging server, and then forwarding same to the head unit by the backend system based on the association relationship.

As claimed, in the account association step, an instant messaging user ID, a vehicle user ID and a vehicle ID are associated and an association relationship is stored in the backend system.

Optionally, the permission determination step comprises:
sending, by the user terminal, a permission determination request to the instant messaging server;
forwarding, by the instant messaging server, the permission determination request to the backend system;
performing, by the backend system, permission determination based on the association relationship, and sending a head unit state query instruction to the head unit if the permission determination indicates success, and ending the process if the permission determination indicates failure;
returning, by the head unit, a head unit state query result to the backend system based on the head unit state query instruction; and
feeding back, by the backend system, the head unit state query result to the user terminal through the instant messaging server.

Optionally, the data exchange step comprises:
sending messaging data or a user instruction to the instant messaging server from the user terminal based on the head unit state query result;
sending, by the instant messaging server, the messaging data or the user instruction to the backend system; and
forwarding, by the backend system, the messaging data and/or the user instruction to the head unit based on the association relationship, and
receiving and displaying the messaging data or executing the user instruction by the head unit.

Optionally, the head unit displays one or more of the following messaging data in the way of:
displaying text information or picture information in the messaging data;
directly opening a website link in the messaging data; and
playing speech information in the messaging data or converting the speech information into text information.

Optionally, when the text information is address information, the address information is used as navigation address information at the head unit.

In one aspect of the invention, an onboard instant messaging system is provided, which is characterized by comprising:
a user terminal configured to send a permission determination request, messaging data and a user instruction to the instant messaging server;
the instant messaging server configured to exchange data between the user terminal and the backend system;
the backend system configured to store an association relationship between an instant messaging user and a vehicle, determine the received permission determination request based on the association relationship, and forward the messaging data or the user instruction from the instant messaging server to a head unit described below if the determination indicates success; and
the head unit configured to receive and display the messaging data sent from the backend system or execute the user instruction sent from the backend system.

The backend system comprises:
a storage module configured to store an association relationship among an instant messaging user ID, a vehicle user ID and a vehicle ID; a permission determination module configured to perform permission determination on the received permission determination request based on the association relationship stored in the storage module; and
a data communication module configured to send, where the permission determination performed by the permission determination module indicates success, a head unit state query instruction to the head unit, receive a head unit state query result fed back from the head unit and forward same to the instant messaging server, and configured, on the other hand, to send the messaging data or the user instruction from the instant messaging server to the head unit.

Optionally, the head unit comprises:
a vehicle state query module configured to query a vehicle state based on the head unit state query instruction and return a query result to the backend system;
a display module configured to receive and display the messaging data sent from the backend system; and
an execution module configured to execute the user instruction sent from the backend system.

Optionally, the display module displays one or more of the following messaging data in the way of:
displaying text information or picture information in the messaging data;
directly opening a website link in the messaging data; and
directly playing audio information in the messaging data.

Optionally, the display module is configured to enable, when the text information is address information, the address information to be used as navigation address information at the head unit.

In the invention, a readable medium is provided for storing a computer program thereon, characterized in that the computer program implements, when executed by a processor, the onboard instant messaging method described above.

In the invention, a computer device is provided, which comprises a memory, a processor, and a computer program stored on the memory and executable on the processor, characterized in that the computer program implements, when executed by the processor, the steps of the onboard instant messaging method described above.

According to the onboard instant messaging system and the onboard instant messaging method of the invention, instant messaging can be better integrated with an onboard system, such that a user can conveniently transmit data or an instruction to the onboard system by means of instant messaging, for example, can input address information in an instant messaging conversation as a navigation address at the onboard system, can directly open a website link in an instant messaging conversation, or can directly play music in an instant messaging conversation. Thereby, the steps of information transmission can be reduced, and the convenience and efficiency to a user can be improved.

### Brief Description of the Drawings

Fig. 1 is a flowchart representing an onboard instant messaging method according to an embodiment of the invention.
Fig. 2 is a specific flowchart of an onboard instant messaging method according to an embodiment of the invention.
Fig. 3 is a structural block diagram of an onboard instant system according to an embodiment of the invention.

### Detailed Description of Embodiments

Some of multiple embodiments of the invention are introduced below and are intended to provide a basic understanding of the invention. They are not intended to confirm the key or decisive elements of the invention or limit the scope of protection.

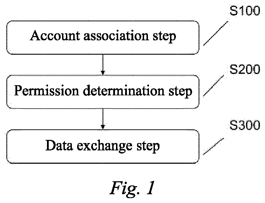

Fig. 1 is a process frame chart representing an onboard instant messaging method according to the invention.

The onboard instant messaging method of the invention is implemented by a user terminal, an instant messaging server, a server, and a head unit. The user terminal refers to a mobile terminal carried by a user during moving, such as a mobile phone or a tablet computer; the instant messaging server is a backend for implementing an instant messaging service; the backend system refers to a backend system established and uniformly managed by, for example, a vehicle provider; and the head unit refers to a vehicle side arranged on a vehicle and controlled by the backend system.

As shown in Fig. 1, the onboard instant messaging method of the invention comprises the following steps:
an account association step S100: associating an instant messaging user with a vehicle and storing an association relationship in a backend system;
a permission determination step S200: sending a permission determination request to an instant messaging server from a user terminal and forwarding the permission determination request to the backend system via the instant messaging server so that the backend system performs permission determination based on the association relationship, and proceeding to a data exchange step described below if the permission determination indicates success, otherwise ending the process; and
a data exchange step S300: sending messaging data or a user instruction to the backend system from the user terminal through the instant messaging server, and then forwarding same to a head unit by the backend system.

Next, the onboard instant messaging method in an embodiment of the invention will be described in detail.

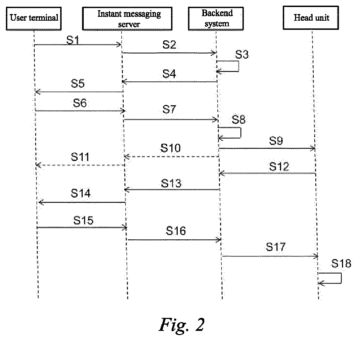

Fig. 2 is a specific flowchart of an onboard instant messaging method according to an embodiment of the invention.

First, the account association step will be described.

As shown in Fig. 2, in step S 1, a user terminal sends an association request to an instant messaging server.

In step S2, the instant messaging server forwards the association request to a backend system.

In step S3, the backend system associates an instant messaging user ID, a vehicle user ID and a vehicle ID and stores an association relationship among the three.

In step S4, the backend system feeds back the association relationship to the instant messaging server.

In step S5, the instant messaging server feeds back the association relationship to the user terminal.

Here, it should be noted that the user terminal realizes associated binding of the messaging user ID, the vehicle user ID and the vehicle ID through the intermediary, i.e. the instant messaging server. As a non-claimed variant, the user terminal may also directly communicate with the backend system to establish a binding relationship, with no need of the instant messaging server.

In addition, the associated binding of the messaging user ID (which refers to, for example, a WeChat user ID or a QQ user ID, etc.), the vehicle user ID (e.g., owner's identity) and the vehicle ID is exemplified here. Of course, other unique identifiers capable of distinguishing among a messaging user, a vehicle user and a vehicle itself may also be bound, and ID is only one of the preferred modes.

Next, the permission determination step will be described below.

In step S6, the user terminal sends a permission determination request to the instant messaging server.

In step S7, the instant messaging server forwards the received permission determination request to the backend system.

In step S8, the backend system performs permission determination based on the association relationship, and if the permission determination indicates success, the process proceeds to step S9, and if the permission determination indicates failure, the process proceeds to step S10.

Here, examples of the permission determination may be indicating whether the subject sending and determining the permission determination request is the object bound in the association relationship, whether the authorization time meets a specified requirement, whether the vehicle requesting authorization has an association relationship with the subject issuing authorization, etc.

In step S9, the backend system sends a head unit state query instruction to a head unit.

In step S10, the backend system feeds back a failure in permission determination to the instant messaging server.

In step S11, the instant messaging server feeds back the failure in permission determination to the user terminal and this process is ended.

In step S12, the head unit returns a head unit state query result to the backend system based on the head unit state query instruction.

In step S13, the backend system feeds back the head unit state query result to the instant messaging server.

In step S14, the instant messaging server feeds back the head unit state query result to the user terminal.

Here, as an example of the head unit state query instruction, various vehicle states, such as a vehicle driving state, a driving position, a battery state, an air-conditioner use state, a vehicle interior temperature, a vehicle hardware state, and an onboard system login state, may be queried, which can be specifically set by the head unit state query instruction.

Finally, the data exchange step will be described below.

In step S15, messaging data or a user instruction is sent to the instant messaging server from the user terminal based on the head unit state query result.

In step S16, the instant messaging server sends the messaging data or the user instruction to the backend system.

In step S17, the backend system forwards the messaging data or the user instruction to the head unit.

In step S18, the head unit receives and displays the messaging data or executes the user instruction.

In the case where the messaging data is received by the head unit, when the messaging data contains text information or picture information, the text information or the picture information is directly displayed. Further, when the text information is address information, the address information can be directly input into a navigation system to serve as a navigation address. When the messaging data contains a website link, the website link is directly opened at the head unit. For another example, when the messaging data contains a music link or the like, the music link in the messaging data is directly opened. For another example, if the messaging data contains speech information, the speech information can be played directly, or speech data can also be recognized, and if the speech data further contains address information, the address information is directly input into the navigation system to serve as a navigation address.

When the user instruction is received by the head unit, the head unit executes the user instruction, for example, the user giving an instruction to turn on a vehicle air conditioner or adjust the position of a vehicle seat or heating the vehicle seat in advance, etc.

The onboard instant messaging method of the invention is described above.

Next, the onboard instant messaging system of the invention will be described.

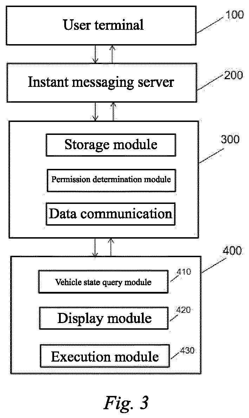

Fig. 3 is a structural block diagram of an onboard instant system according to an embodiment of the invention.

As shown in Fig. 3, the onboard instant system in an embodiment of the invention comprises: a user terminal 100, an instant messaging server 200, a backend system 300, and a head unit 400.

The user terminal 100 refers to a mobile terminal carried by a user during moving, such as a mobile phone or a tablet computer; the instant messaging server 200 is a server for implementing an instant messaging service; the backend system 300 refers to a backend system established and uniformly managed by, for example, a vehicle provider; and the head unit 400 refers to a vehicle side arranged on a vehicle and controlled by the backend system 300.

Specifically, the user terminal 100 is configured to send a request and messaging data or a user instruction to the instant messaging server 200. The instant messaging server 200 is configured to exchange data between the user terminal 100 and the backend system 300. The backend system 300 is configured to store an association relationship between an instant messaging user and a vehicle, determine the received request based on the association relationship, and forward the messaging data from the instant messaging server 300 to the head unit 400 if the determination indicates success. The head unit 400 is configured to receive and display the messaging data sent from the backend system 300 or execute the user instruction sent from the backend system 300.

Further, the backend system 300 comprises:
a storage module 310 configured to establish and store an association relationship among an instant messaging user ID, a vehicle user ID and a vehicle ID;
a permission determination module 320 configured to perform permission determination on the received permission determination request based on the association relationship stored in the storage module 310; and
a data communication module 330 configured to send, where the permission determination performed by the permission determination module 320 indicates success, a head unit state query instruction to the head unit 400, receive a head unit state query result fed back from the head unit 400 and forward same to the instant messaging server 200, and configured, on the other hand, to send the messaging data or the user instruction from the instant messaging server 200 to the head unit 400.

Further, the head unit 400 comprises:
a vehicle state query module 410 configured to query a vehicle state based on the head unit state query instruction from the backend system 300 and return a query result to the backend system 200;
a display module 420 configured to receive and display the messaging data sent from the backend system; and
an execution module 430 configured to execute the user instruction sent from the backend system.

The display module 420 displays one or more of the following messaging data in the way of:
displaying text information or picture information in the messaging data;
directly opening a website link in the messaging data; and
directly playing audio information in the messaging data.

Further, the display module 430 is configured to enable, when the text information is address information, the address information to be used as navigation address information at the head unit.

According to the onboard instant messaging system and the onboard instant messaging method of the invention, instant messaging can be better integrated with an onboard system, such that a user can conveniently transmit data or an instruction to the onboard system by means of instant messaging, for example, can input address information in an instant messaging conversation as a navigation address at the onboard system, can directly open a website link in an instant messaging conversation, or can directly play music in an instant messaging conversation. Thereby, the steps of information transmission can be reduced, and the convenience and efficiency to a user can be improved.

The invention further provides a readable medium, which has a computer program stored thereon, characterized in that the computer program implements, when executed by a processor, the onboard instant messaging method described above.

The invention further provides a computer device, which comprises a memory, a processor, and a computer program stored on the memory and executable on the processor, characterized in that the computer program implements, when executed by the processor, the steps of the onboard instant messaging method described above.

The above examples mainly illustrate the onboard instant messaging system and the onboard instant messaging method of the invention. Although only some specific implementations of the invention are described, a person of ordinary skill in the art should understand that the invention may be implemented in multiple other forms.

Accordingly, the presented examples and embodiments are considered to be illustrative rather than restrictive.

## Claims

1. An onboard instant messaging method, being implemented by a user terminal (100), an instant messaging server (200), a backend system (300) and a head unit (400), which comprises the following steps:
an account association step (S 100) of associating an instant messaging user with a vehicle and storing an association relationship in the backend system;
a permission determination step (S200) of sending a permission determination request to the backend system from the user terminal via the instant messaging server so that the backend system performs permission determination based on the association relationship, and proceeding to a data exchange step (S300) described below if the permission determination indicates success, otherwise ending the process; and
the data exchange step of sending messaging data to the backend system from the user terminal via the instant messaging server, and then forwarding same to the head unit by the backend system based on the association relationship,
wherein in the account association step, an instant messaging user ID, a vehicle user ID and a vehicle ID are associated and an association relationship is stored in the backend system,
wherein the account association step comprises steps S1 to S5, and wherein
in step S1, the user terminal (100) sends an association request to the instant messaging server (200),
in step S2, the instant messaging server (200) forwards the association request to the backend system (300),
in step S3, the backend system (300) associates the instant messaging user ID, the vehicle user ID and the vehicle ID and stores an association relationship among the three,
in step S4, the backend system (300) feeds back the association relationship to the instant messaging server (200),
in step S5, the instant messaging server (200) feeds back the association relationship to the user terminal (100).

2. The onboard instant messaging method according to claim 1, **characterized in that**
the permission determination step comprises:
sending, by the user terminal, a permission determination request to the instant messaging server;
forwarding, by the instant messaging server, the permission determination request to the backend system;
performing, by the backend system, permission determination based on the association relationship, and sending a head unit state query instruction to the head unit if the permission determination indicates success, and ending the process if the permission determination indicates failure;
returning, by the head unit, a head unit state query result to the backend system based on the head unit state query instruction; and
feeding back, by the backend system, the head unit state query result to the user terminal through the instant messaging server.

3. The onboard instant messaging method according to claim 2, **characterized in that**
the data exchange step comprises:
sending messaging data or a user instruction to the instant messaging server from the user terminal based on the head unit state query result;
sending, by the instant messaging server, the messaging data or the user instruction to the backend system; and
forwarding, by the backend system, the messaging data and/or the user instruction to the head unit based on the association relationship, and
receiving and displaying the messaging data or executing the user instruction by the head unit.

4. The onboard instant messaging method according to claim 3, **characterized in that**
the head unit displays one or more of the following messaging data in the way of:
displaying text information or picture information in the messaging data;
directly opening a website link in the messaging data; and
playing speech information in the messaging data or converting the speech information into text information.

5. The onboard instant messaging method according to claim 4, **characterized in that**
when the text information is address information, the address information is used as navigation address information at the head unit.

6. An onboard instant messaging system, comprising
a user terminal (100) configured to send a permission determination request, messaging data and a user instruction to an instant messaging server (200);
the instant messaging server configured to exchange data between the user terminal and a backend system (300);
the backend system configured to store an association relationship between an instant messaging user and a vehicle, determine the received permission determination request based on the association relationship, and forward the messaging data or the user instruction from the instant messaging server to a head unit (400) described below if the determination indicates success; and
the head unit configured to receive and display the messaging data sent from the backend system or execute the user instruction sent from the backend system,
wherein the backend system comprises: a storage module configured to store an association relationship among an instant messaging user ID, a vehicle user ID and a vehicle ID; a permission determination module configured to perform permission determination on the received permission determination request based on the association relationship stored in the storage module; and
a data communication module configured to send, where the permission determination performed by the permission determination module indicates success, a head unit state query instruction to the head unit, receive a head unit state query result fed back from the head unit and forward same to the instant messaging server, and configured, on the other hand, to send the messaging data or the user instruction from the instant messaging server to the head unit.

7. The onboard instant messaging system according to claim 6, **characterized in that** the head unit comprises: a vehicle state query module configured to query a vehicle state based on the head unit state query instruction and return a query result to the backend system;
a display module configured to receive and display the messaging data sent from the backend system; and
an execution module configured to execute the user instruction sent from the backend system.

8. The onboard instant messaging system according to claim 7, **characterized in that**
the display module displays one or more of the following messaging data in the way of:
displaying text information or picture information in the messaging data;
directly opening a website link in the messaging data; and
directly playing audio information in the messaging data.

9. The onboard instant messaging system according to claim 8, **characterized in that**
the display module is configured to enable, when the text information is address information, the address information to be used as navigation address information at the head unit.

## Patentansprüche

1. Onboard-Sofortnachrichtenverfahren, das durch ein Benutzerendgerät (100), einem Sofortnachrichtenserver (200), einem Backend-System (300) und einer Haupteinheit (400) implementiert ist, das die folgenden Schritte umfasst:
einen Kontozuordnungsschritt (S100), bei dem ein Sofortnachrichtenbenutzer einem Fahrzeug zugeordnet wird und eine Zuordnungsbeziehung im Backend-System gespeichert wird;
einen Erlaubnisbestimmungsschritt (S200), bei dem eine Erlaubnisbestimmungsanforderung aus dem Benutzerendgerät über den Sofortnachrichtenserver an das Backend-System gesendet wird, sodass das Backend-System basierend auf der Zuordnungsbeziehung eine Erlaubnisbestimmung durchführt, und ein weiter unten beschriebener Datenaustauschschritt (S300) ausgeführt wird, wenn die Erlaubnisbestimmung Erfolg anzeigt, andernfalls der Vorgang beendet wird; und
den Datenaustauschschritt, bei dem aus dem Benutzerendgerät über den Sofortnachrichtenserver Nachrichtendaten an das Backend-System gesendet werden und diese dann basierend auf der Zuordnungsbeziehung durch das Backend-System an die Haupteinheit weitergeleitet werden,
wobei bei dem Kontozuordnungsschritt eine Sofortnachrichtenbenutzer-ID, eine Fahrzeugbenutzer-ID und eine Fahrzeug-ID zugeordnet werden und eine Zuordnungsbeziehung im Backend-System gespeichert wird,
wobei der Kontozuordnungsschritt die Schritte S1 bis S5 umfasst, und wobei
bei Schritt S1 das Benutzerendgerät (100) eine Zuordnungsanforderung an den Sofortnachrichtenserver (200) sendet,
bei Schritt S2 der Sofortnachrichtenserver (200) die Zuordnungsanforderung an das Backend-System (300) weiterleitet,
bei Schritt S3 das Backend-System (300) die Sofortnachrichtenbenutzer-ID, die Fahrzeug-Benutzer-ID und die Fahrzeug-ID zuordnet und eine Zuordnungsbeziehung zwischen den dreien speichert,
bei Schritt S4 das Backend-System (300) die Zuordnungsbeziehung an den Sofortnachrichtenserver (200) zurückmeldet,
bei Schritt S5 der Sofortnachrichtenserver (200) die Zuordnungsbeziehung an das Benutzerendgerät (100) zurückmeldet.

2. Onboard-Sofortnachrichtenverfahren nach Anspruch 1, **dadurch gekennzeichnet, dass** der Erlaubnisbestimmungsschritt umfasst:
Senden einer Erlaubnisbestimmungsanforderung durch das Benutzerendgerät an den Sofortnachrichtenserver;
Weiterleiten der Erlaubnisbestimmungsanforderung durch den Sofortnachrichtenserver an das Backend-System;
Durchführen einer Erlaubnisbestimmung durch das Backend-System basierend auf der Zuordnungsbeziehung und Senden einer Haupteinheitzustandsabfrageanweisung an die Haupteinheit, wenn die Erlaubnisbestimmung Erfolg anzeigt, und Beenden des Vorgangs, wenn die Erlaubnisbestimmung einen Fehler anzeigt;
Rückmelden eines Haupteinheitzustandsabfrageergebnisses durch die Haupteinheit an das Backend-System basierend auf der Haupteinheitzustandsabfrageanweisung; und
Rückmelden des Haupteinheitzustandsabfrageergebnisses durch das Backend-System über den Sofortnachrichtenserver an das Benutzerendgerät.

3. Onboard-Sofortnachrichtenverfahren nach Anspruch 2, **dadurch gekennzeichnet, dass** der Datenaustauschschritt umfasst:
Senden von Nachrichtendaten oder einer Benutzeranweisung an den Sofortnachrichtenserver aus dem Benutzerendgerät basierend auf dem Haupteinheitzustandsabfrageergebnis;
Senden der Nachrichtendaten oder der Benutzeranweisung durch den Sofortnachrichtenserver an das Backend-System; und
Weiterleiten der Nachrichtendaten und/oder der Benutzeranweisung durch das Backend-System basierend auf der Zuordnungsbeziehung an die Haupteinheit, und
Empfangen und Anzeigen der Nachrichtendaten oder Ausführen der Benutzeranweisung durch die Haupteinheit.

4. Onboard-Sofortnachrichtenverfahren nach Anspruch 3, **dadurch gekennzeichnet, dass** die Haupteinheit eine oder mehrere der folgenden Nachrichtendaten anzeigt durch:
Anzeigen von Textinformationen oder Bildinformationen in den Nachrichtendaten;
direktes Öffnen eines Website-Links in den Nachrichtendaten; und
Wiedergeben von Sprachinformationen in den Nachrichtendaten oder Umwandeln der Sprachinformationen in Textinformationen.

5. Onboard-Sofortnachrichtenverfahren nach Anspruch 4, **dadurch gekennzeichnet, dass**
wenn die Textinformationen Adressinformationen sind, die Adressinformationen als Navigationsadressinformationen an der Haupteinheit verwendet werden.

6. Onboard-Instant-Messaging-System, aufweisend:
ein Benutzerendgerät (100), das dazu konfiguriert ist, eine Erlaubnisbestimmungsanforderung, Nachrichtendaten und eine Benutzeranweisung an einen Sofortnachrichtenserver (200) zu senden;
der Sofortnachrichtenserver dazu konfiguriert ist, Daten zwischen dem Benutzerendgerät und einem Backend-System (300) auszutauschen;
das Backend-System dazu konfiguriert ist, eine Zuordnungsbeziehung zwischen einem Sofortnachrichtenbenutzer und einem Fahrzeug zu speichern, die empfangene Erlaubnisbestimmungsanforderung basierend auf der Zuordnungsbeziehung zu bestimmen und die Nachrichtendaten oder die Benutzeranweisung aus dem Sofortnachrichtenserver an eine weiter unten beschriebene Haupteinheit (400) weiterzuleiten, wenn die Bestimmung Erfolg anzeigt; und
die Haupteinheit dazu konfiguriert ist, die aus dem Backend-System gesendeten Nachrichtendaten zu empfangen und anzuzeigen oder die aus dem Backend-System gesendete Benutzeranweisung auszuführen,
wobei das Backend-System aufweist: ein Speichermodul, das dazu konfiguriert ist, eine Zuordnungsbeziehung zwischen einer Sofortnachrichtenbenutzer-ID, einer Fahrzeug-Benutzer-ID und einer Fahrzeug-ID zu speichern; ein Berechtigungsbestimmungsmodul, das dazu konfiguriert ist, eine Berechtigungsbestimmung für die empfangene Berechtigungsbestimmungsanforderung basierend auf der in dem Speichermodul gespeicherten Zuordnungsbeziehung durchzuführen; und
ein Datenkommunikationsmodul, das dazu konfiguriert ist, wenn die durch das Berechtigungsbestimmungsmodul durchgeführte Berechtigungsbestimmung Erfolg anzeigt, eine Haupteinheitzustandsabfrageanweisung an die Haupteinheit zu senden, ein aus der Haupteinheit zurückgemeldetes Haupteinheitzustandsabfrageergebnis zu empfangen und an den Sofortnachrichtenserver weiterzuleiten, und das andererseits dazu konfiguriert ist, die Nachrichtendaten oder die Benutzeranweisung aus dem Sofortnachrichtenserver an die Haupteinheit zu senden.

7. Onboard-Sofortnachrichtensystem nach Anspruch 6, **dadurch gekennzeichnet, dass** die Haupteinheit aufweist:
ein Fahrzeugzustandsabfragemodul, das dazu konfiguriert ist, einen Fahrzeugzustand basierend auf der Haupteinheitzustandsabfrageanweisung abzufragen und ein Abfrageergebnis an das Backend-System zurückzumelden;
ein Anzeigemodul, das dazu konfiguriert ist, die aus dem Backend-System gesendeten Nachrichtendaten zu empfangen und anzuzeigen; und
ein Ausführungsmodul, das dazu konfiguriert ist, die aus dem Backend-System gesendete Benutzeranweisung auszuführen.

8. Onboard-Sofortnachrichtensystem nach Anspruch 7, **dadurch gekennzeichnet, dass** das Anzeigemodul eine oder mehrere der folgenden Nachrichtendaten anzeigt, durch:
Anzeigen von Textinformationen oder Bildinformationen in den Nachrichtendaten;
direktes Öffnen eines Website-Links in den Nachrichtendaten; und
direktes Abspielen von Audioinformationen in den Nachrichtendaten.

9. Onboard-Sofortnachrichtensystem nach Anspruch 8, **dadurch gekennzeichnet, dass** das Anzeigemodul so konfiguriert ist, dass, wenn die Textinformationen Adressinformationen sind, die Adressinformationen als Navigationsadressinformationen an der Haupteinheit verwendet werden können.

## Revendications

1. Procédé de messagerie instantanée de bord, mis en œuvre par un terminal utilisateur (100), un serveur de messagerie instantanée (200), un système dorsal (300) et une unité de tête (400), qui comprend les étapes suivantes :
une étape d'association de compte (S100), de l'association d'un utilisateur de messagerie instantanée à un véhicule et du stockage d'une relation d'association dans le système dorsal ;
une étape de détermination de permission (S200), de l'envoi d'une demande de détermination de permission, au système dorsal, depuis le terminal utilisateur, par l'intermédiaire du serveur de messagerie instantanée, de telle sorte que le système dorsal réalise une détermination de permission, sur la base de la relation d'association, et du passage à une étape d'échange de données (S300) décrite ci-dessous, si la détermination de permission indique un succès, autrement de la terminaison du processus ; et
l'étape d'échange de données, de l'envoi des données de messagerie, au système dorsal, depuis le terminal utilisateur, par l'intermédiaire du serveur de messagerie instantanée, et puis du transfert de celles-ci à l'unité de tête, par le système dorsal, sur la base de la relation d'association,
dans lequel, dans l'étape d'association de compte, une ID d'utilisateur de messagerie instantanée, une ID d'utilisateur de véhicule et une ID de véhicule sont associées et une relation d'association est stockée dans le système dorsal,
dans lequel l'étape d'association de compte comprend les étapes S1 à S5, et dans lequel
dans l'étape S1, le terminal utilisateur (100) envoie une demande d'association au serveur de messagerie instantanée (200),
dans l'étape S2, le serveur de messagerie instantanée (200) transfère la demande d'association au système dorsal (300),
dans l'étape S3, le système dorsal (300) associe l'ID d'utilisateur de messagerie instantanée, l'ID d'utilisateur de véhicule et l'ID de véhicule et stocke une relation d'association parmi les trois,
dans l'étape S4, le système dorsal (300) retransmet la relation d'association au serveur de messagerie instantanée (200),
dans l'étape S5, le serveur de messagerie instantanée (200) retransmet la relation d'association au terminal utilisateur (100).

2. Procédé de messagerie instantanée de bord selon la revendication 1, **caractérisé en ce que** l'étape de détermination de permission comprend :
l'envoi, par le terminal utilisateur, d'une demande de détermination de permission, au serveur de messagerie instantanée ;
le transfert, par le serveur de messagerie instantanée, de la demande de détermination de permission, au système dorsal ;
la réalisation, par le système dorsal, d'une détermination de permission, sur la base de la relation d'association, et l'envoi d'une instruction d'interrogation d'état d'unité de tête, à l'unité de tête, si la détermination de permission indique un succès, et la terminaison du processus si la détermination de permission indique un échec ;
le renvoi, par l'unité de tête, d'un résultat d'interrogation d'état d'unité de tête, au système dorsal, sur la base de l'instruction d'interrogation d'état d'unité de tête ; et
la retransmission, par le système dorsal, du résultat d'interrogation d'état d'unité de tête, au terminal utilisateur, par l'intermédiaire du serveur de messagerie instantanée.

3. Procédé de messagerie instantanée de bord selon la revendication 2, **caractérisé en ce que**
l'étape d'échange de données comprend :
l'envoi de données de messagerie ou d'une instruction utilisateur, au serveur de messagerie instantanée, depuis le terminal utilisateur, sur la base du résultat d'interrogation d'état d'unité de tête ;
l'envoi, par le serveur de messagerie instantanée, des données de messagerie ou de l'instruction utilisateur, au système dorsal ; et
le transfert, par le système dorsal, des données de messagerie et/ou de l'instruction utilisateur, à l'unité de tête, sur la base de la relation d'association, et
la réception et l'affichage des données de messagerie ou l'exécution de l'instruction utilisateur par l'unité de tête.

4. Procédé de messagerie instantanée de bord selon la revendication 3, **caractérisé en ce que**
l'unité de tête affiche une ou plusieurs des données de messagerie suivantes de cette manière :
l'affichage d'informations texte ou d'informations image dans les données de messagerie ;
l'ouverture directe d'un lien de site Web dans les données de messagerie ; et
la lecture d'informations voix dans les données de messagerie ou la conversion des informations voix en informations texte.

5. Procédé de messagerie instantanée de bord selon la revendication 4, **caractérisé en ce que**
lorsque les informations texte sont des informations adresse, les informations adresse sont utilisées en tant qu'informations adresse de navigation dans l'unité de tête.

6. Système de messagerie instantanée de bord, comprenant
un terminal utilisateur (100) configuré pour envoyer une demande de détermination de permission, des données de messagerie et une instruction utilisateur, à un serveur de messagerie instantanée (200) ;
le serveur de messagerie instantanée étant configuré pour échanger des données entre le terminal utilisateur et un système dorsal (300) ;
le système dorsal étant configuré pour stocker une relation d'association entre un utilisateur de messagerie instantanée et un véhicule, déterminer la demande de détermination de permission reçue, sur la base de la relation d'association, et transférer les données de messagerie ou l'instruction utilisateur, depuis le serveur de messagerie instantanée, à une unité de tête (400) décrite ci-dessous, si la détermination indique un succès ; et
l'unité de tête étant configurée pour recevoir et afficher les données de messagerie envoyées depuis le système dorsal ou exécuter l'instruction utilisateur envoyée depuis le système dorsal,
dans lequel le système dorsal comprend : un module de stockage configuré pour stocker une relation d'association parmi une ID d'utilisateur de messagerie instantanée, une ID d'utilisateur de véhicule et une ID de véhicule ; un module de détermination de permission configuré pour réaliser une détermination de permission sur la demande de détermination de permission reçue, sur la base de la relation d'association stockée dans le module de stockage ; et
un module de communication de données configuré pour envoyer, lorsque la détermination de permission réalisée par la module de détermination de permission indique un succès, une instruction d'interrogation d'état d'unité de tête, à l'unité de tête, recevoir un résultat d'interrogation d'état d'unité de tête retransmis depuis l'unité de tête, et transférer celui-ci au serveur de messagerie instantanée, et configuré, d'autre part, pour envoyer les données de messagerie ou l'instruction utilisateur, depuis le serveur de messagerie instantanée, à l'unité de tête.

7. Système de messagerie instantanée de bord selon la revendication 6, **caractérisé en ce que** l'unité de tête comprend : un module d'interrogation d'état de véhicule configuré pour effectuer une interrogation concernant un état de véhicule, sur la base de l'instruction d'interrogation d'état d'unité de tête, et renvoyer un résultat d'interrogation au système dorsal ;
un module d'affichage configuré pour recevoir et afficher les données de messagerie envoyées depuis le système dorsal ; et
un module d'exécution configuré pour exécuter l'instruction utilisateur envoyée depuis le système dorsal.

8. Système de messagerie instantanée de bord selon la revendication 7, **caractérisé en ce que** le module d'affichage affiche une ou plusieurs des données de messagerie suivantes de cette manière :
l'affichage d'informations texte ou d'informations image dans les données de messagerie ;
l'ouverture directe d'un lien de site Web dans les données de messagerie ; et
la lecture directe d'informations audio dans les données de messagerie.

9. Système de messagerie instantanée de bord selon la revendication 8, **caractérisé en ce que**
le module d'affichage est configuré pour autoriser, lorsque les informations texte sont des informations adresse, aux informations adresse d'être utilisées en tant qu'informations adresse de navigation dans l'unité de tête.
